# EUROPÄISCHE PATENTSCHRIFT

(11) **EP 1 848 782 B1**
(45) Veröffentlichungstag und Bekanntmachung des Hinweises auf die Patenterteilung: **17.09.2008**
(21) Anmeldenummer: 05816458.3
(22) Anmeldetag: 15.12.2005
(51) Int. Cl.: C09D 5/03, C09D 167/00

(54) **HITZEHÄRTBARE PULVERLACKZUSAMMENSETZUNG SOWIE ZU IHRER HERSTELLUNG VERWENDBARES POLYESTERHARZ**
THERMOSETTING POWDER PAINT COMPOSITION AND POLYESTER RESIN THAT CAN BE USED FOR THE PRODUCTION THEREOF
COMPOSITION DE PEINTURE EN POUDRE THERMODURCISSABLE ET RESINE DE POLYESTER POUVANT ETRE UTILISEE POUR PRODUIRE CETTE COMPOSITION

(30) Priorität: 20.01.2005 AT 862005
(43) Veröffentlichungstag der Anmeldung: 31.10.2007
(73) Patentinhaber: TIGER Coatings GmbH & Co. KG, 4600 Wels (AT)
(72) Erfinder: REICH, Gerhard, A-4600 Wels (AT)
(74) Vertreter: Patentanwälte BARGER, PISO & PARTNER
(86) Internationale Anmeldenummer: PCT/AT2005/000506
(87) Internationale Veröffentlichungsnummer: WO 2006/076748

(56) Entgegenhaltungen:
- EP-A- 0 389 926
- EP-A- 0 649 890
- US-A- 5 744 522
- US-A1- 2004 010 084

## Beschreibung

Die Erfindung betrifft hitzehärtbare pulverförmige Formulierungen auf der Basis von carboxylfunktionellen Polyesterharzen und zu deren Vernetzung geeigneter Bindemittelkomponenten sowie Polyesterharze mit endständigen Carboxylgruppen zur Herstellung von Pulverlackzusammensetzungen.

Pulverlacke sind wegen ihrer Lösungsmittelfreiheit aus ökonomischen wie ökologischen Gründen hoch geschätzt. Sie überzeugen durch eine Vielzahl günstiger technischer Eigenschaften und weisen bei entsprechender Zusammensetzung auch gute bis außerordentlich hohe Wetterbeständigkeit auf.

Breiteste Anwendung haben vor allem hitzehärtbare Pulverlacke erfahren, und unter diesen besonders jene, welche Polyesterharze mit endständigen Carboxylgruppen zur Grundlage haben. Sie sind dem Stande der Technik nach wohlbekannt. Genannt seien beispielsweise DE 2 163 962 A1, DE 2 618 729 A1, DE 4 012 020 A1, US 4,471,108 A und EP 0 389 926 B1. Diese Dokumente beschreiben Formulierungen, welche im wesentlichen die aromatischen Dicarbonsäuren Terephthalsäure und Isophthalsäure enthalten. Die zur Vernetzung verwendeten Bindemittelkomponenten sind polyepoxidische Verbindungen, bevorzugt Triglycidylisocyanurat. Die EP 0 110 450 B1 offenbart Pulverbeschichtungen auf der Basis carboxylgruppenhaltiger Polyester mit Säurezahlen zwischen 10 und 30 mg KOH/g und Diglydidylphthalaten, wobei Diglycidylester einer Phthalsäure wie Phthal-, Terephthal- und Isophthalsäure und ihrer Hydro-Derivate wie beispielsweise Hexahydrophthalsäure, 1,4-Cyclohexandicarbonsäure gemeint sind.

Gemäß der Lehre der EP 0 389 926 B1 ist die auf der Basis derartiger Formulierungen erzielbare Wetterbeständigkeit maximierbar, wenn in den Harzformulierungen Isophthalsäure als allein verwendete aromatische Dicarbonsäure fungiert, also auf die Verwendung von Terephthalsäure verzichtet wird. Polyester aus annähernd äquimolaren Anteilen von Terephthal- und Isophthalsäure weisen gemäß genannten Dokuments im Vergleich zu Formulierungen aus mindestens 70 Mol-% Terephthalsäure und höchstens 30 Mol-% Isophthalsäure zwar verbesserte Witterungsbeständigkeit auf, doch sind die mechanischen Eigenschaften (Flexibilität) solcher Systeme für eine Reihe von Anwendungen unzureichend. Weiters offenbart EP 0 389 926 B1, dass dem - mit dem bevorzugten oder alleinigen Einsatz von Isophthalsäure in Zusammenhang stehenden - Flexibilitätsrückgang der Beschichtungen entgegengewirkt werden kann, wenn-bezogen auf die Gesamtheit der in der Harzformulierung verwendeten Dicarbonsäuren - 1,4-Cyclohexandicarbonsäure mit einem molaren Anteil von zumindest 5 % präsent ist.

Wie Untersuchungen der Anmelderin zeigen, ergeben die in EP 0 389 926 B1 geoffenbarten Beispiele zwar bessere Flexibilität als Beschichtungen auf der Basis von isophthalsäurereichen Polyesterharzen, welche ohne 1,4-Cyclohexandicarbonsäure formuliert werden, doch reicht die so erzielbare Flexibilität nicht an jene von Beschichtungen heran, die Terephthalsäure als überwiegend verwendete Dicarbonsäure enthalten. Die zwingende Mitverwendung von Harzrohstoffen der Funktionalität 3 oder höher bei der Formulierung jener Polyester bringt Einbußen beim Oberflächenaspekt, wie beispielsweise verschlechterten Verlauf, Glanzminderung durch "Nadelstiche", der damit hergestellten, eingebrannten Formulierungen mit sich.

EP 0 487 485 A2 sowie EP 0 561 102 B1 beschreiben Polyester, zu deren Herstellung als Dicarbonsäure ausschließlich oder zumindest überwiegend 1,4-Cyclohexandicarbonsäure herangezogen wird. Polyester der beschriebenen Art können dann gemäß diesen Dokumenten zusammen mit einer Polyepoxdverbindung, vorzugsweise Triglycidylisocyanurat, zu pulverförmigen hitzehärtbaren Beschichtungsmassen formuliert werden, die eine verbesserte Beständigkeit bei Schnellbewitterung zeigen.

Es zeigt sich aber, dass - anders als bei der Schnellbewitterung im Labor - derartige Pulverbeschichtungen auf der Basis cycloaliphatischer Polyester bei Freibewitterung außerordentlich rasch Schaden nehmen. Darüber hinaus ist 1,4-Cyclohexandicarbonsäure im Vergleich zu den üblicherweise verwendeten aromatischen Dicarbonsäuren Terephthalsäure und Isophthalsäure ganz erheblich teurer. Es überrascht somit nicht, dass diese Systeme in der Praxis keine Bedeutung haben.

EP 0 322 834 B1 lehrt, dass zur Erzeugung außenbeständiger Pulverlacke auf Basis carboxylfunktioneller Polyesterharze anstelle des toxikologisch bedenklichen Härters Triglycidylisocyanurat β-Hydroxyalkylamide herangezogen werden können. Darüber hinaus offenbart diese EP. B1, dass die Mitverwendung von kristallinem, carboxylgruppenhaltigem Material wie aliphatischen C4-C22 - Polycarbonsäuren und/oder polymeren Polyanhydriden bei der Erstellung der Pulverlacke zu verbesserter Flexibilität und verbessertem Verfließen führt, was wiederum zu verbesserter Glätte und gesteigertem Glanz der resultierenden Beschichtungen führt.

Die in EP 0 322 834 B1 geoffenbarten Beispiele betreffen keine Polyester auf der Basis von Isophthalsäure, und bei von der Anmelderin durchgeführten Versuchen zeigt sich, dass bei solchen Polyesterharzen die in der EP 0 322 834 B1 zur Steigerung der Flexibilität besonders bevorzugte Mitverwendung von Dodecandisäure nicht zum gewünschten Ziel führt.

EP 0 649 890 B1 beschreibt in Analogie zu EP 0 389 926 B1, wie hochwetterfeste Pulverbeschichtungen mit verbesserter Flexibilität auf der Basis carboxylgruppenhaltiger Polyesterharze mit einen molaren Isophthalsäureanteil - bezogen auf die Gesamtheit der verwendeten Dicarbonsäuren - von > 80% und β-Hydroxyalkylamiden als Härter hergestellt werden können.

Wie bei EP 0 389 926 B1 gilt auch hier: die mechanischen Eigenschaften der geoffenbarten Formulierungen sind unzureichend.

Eine weitere Strategie zur Steigerung der Flexibilität von Pulverlacken ist es, neben den üblicherweise verwendeten amorphen Polyesterharzen semikristalline Polyester einzusetzen. Der Hintergrund zum Einsatz teilkristalliner Harze liegt im Umstand, dass diese unter der Voraussetzung eines hinlänglich hohen Kristallitschmelzpunktes auch dann Feststoffe sind, wenn ihre Glasübergangstemperatur weit unterhalb der Raumtemperatur liegt. Ihr Feststoffcharakter verleiht ihnen Eignung zum Rohstoff für Pulverlacke - die ja bei Raumtemperatur fest zu sein haben - , ihre tiefe Glasübergangstemperatur steigert jedoch die Flexibilität der Beschichtung über jenes Maß, das (amorphe) Pulverlack-Bindemittel mit ihrer Glasübergangstemperatur von üblicherweise > 50°C kennzeichnet. Die oben genannte EP 0 322 834 B1 zählt zu jenen Schriften, daneben beispielsweise auch WO91/14745 A1, DE 197 54 327 A1 oder WO 97/20895 A1, in denen dieser Stand der Technik beschrieben wird.

Es ist anzumerken, dass die Formulierungsfreiheit bei der Konzeption kristalliner Harze recht gering ist. Dem Erzielen eines passenden Schmelzpunktes kommt hohe Priorität zu, wichtige übrige Bindemittel-Charakteristika müssen daher teilweise zurückstehen. Die schmale Basis an geeigneten Rohstoffen bedingt vielfach hohe Preise, die zudem durch aufwendige verfahrenstechnische Erfordernisse (definierte Kristallisation durch definierte Temperaturführung nach der Synthese der Harze und aufwendige Zerkleinerung der zumeist äußerst zäh-harten Massen) weiter gesteigert werden. Besonders problematisch ist jedoch, dass die teilkristalline Bindemittelkomponente im Pulverlack- in Kombination mit dem amorphen (Haupt-)Anteil - nicht mehr so spontan und willig kristallisiert wie in ihrer Reinform, was sich auf die Vermahlbarkeit der Pulverlackmassen im Zuge des Herstellprozesses wie auch die Lagerstabilität der Pulverlacke ausgesprochen nachteilig auswirkt, da der - ursprünglich - semikristalline Harzanteil im fertigen Pulverlack mehr oder weniger amorph vorliegt und mit seiner niedrigen Glasübergangstemperatur nicht nur die künftige Beschichtung flexibilisiert, sondern auch zu den oben genannten Schwierigkeiten führt. Darüber hinaus ist wegen der sehr unterschiedlichen physikalischen Eigenschaften des amorphen und des semikristallinen Polyesters das Processing des Extrusionsprozesses als sehr anspruchsvoll zu bezeichnen. Die Fülle an Schwierigkeiten bei dieser Strategie lassen die detaillierten Ausführungen in der WO91/14745 A1 unschwer erkennen (Seite 15, Zeile 11 bis Seite 18, Zeile 27). Als preiswerte Routineverfahren zur Herstellung von Pulverlacken sind die dort geoffenbarten Maßnahmen nicht zu bezeichnen.

Es besteht daher Bedarf an Pulverlackzusammensetzungen auf der Basis carboxylgruppenhaltiger Polyesterharze und zur Hitzehärtung dieser Harze geeigneter Vernetzer, welche die Herstellung hochwetterfester und zugleich flexibler Pulverbeschichtungen mit erstklassigem Oberflächenaspekt und Verlauf erlauben, die sich hinsichtlich ihrer Vermahlbarkeit und Lagerstabilität als problemlos erweisen, und die sich preislich mit Formulierungen auf der Basis von amorphen Polyesterharzen unter der überwiegenden Verwendung von Isophthalsäure und ggf. Terephthalsäure vergleichen lassen. Weiters besteht Bedarf an einem Verfahren zur Herstellung derartiger Pulverlackzusammensetzungen.

Es hat sich in völlig unerwarteter Weise gezeigt, dass solche Pulverlacke zugängig sind, wenn carboxylgruppenhaltigen Polyesterharzen, welche zu wenigstens 50 Mol-%, bezogen auf die Gesamtheit aller verwendeten Dicarbonsäuren, aus Einheiten von Isophthalsäure bestehen, in geschmolzenem Zustand geringe Mengen an einer, Heteroatome enthaltenden, Polycarbonsäure, vorzugsweise trifunktionellen Carbonsäure, zugesetzt werden und diese Harze gemäß dem vorbenannten Stand der Technik unter Verwendung von β-Hydroxyalkylamiden (wie beispielsweise Primid^{®} XL 552 oder Primid^{®} QM 1260, Fa. EMS PRIMID) oder Polyepoxiden (wie beispielsweise Triglycidylisocyanurat = Araldite^{®} PT 810 oder Mischungen aus Terephthalsäurediglycidylester und Trimellitsäuretriglycidylester = Araldite^{®} PT 910 oder Araldite^{®} PT 912, Fa. HUNTSMAN) als Härter zu Pulverlacken formuliert werden. Die carboxylgruppenhaltigen Polyesterharze im Sinne der vorliegenden Erfindung weisen eine Glasübergangstemperatur Tg von wenigstens 35°C, eine Säurezahl von 15 bis 80 mg KOH/g und eine Hydroxylzahl von max. 15 mg KOH/g, vorzugsweise max. 10 mg KOH/g auf.

Pulverlacke mit einer besonders vorteilhaften Eigenschaftskombination lassen sich durch den erfinungsgemäßen Zusatz von 1,3,5-Tris(2-carboxyethyl)isocyanurat zur Harzschmelze erzielen.

Wird neben Isophthalsäure auch Terephthalsäure zur Herstellung der erfindungsgemäßen Polyesterharze verwendet, verringert sich in Übereinstimmung mit EP 0 389 926 B1 die Wetterbeständigkeit damit erzeugter Pulverlacke, verglichen zu den vorgenannten Überzügen. Anders als in EP 0 389 926 B1 dargestellt, weisen die erfindungsgemäßen Beschichtungen jedoch hohe Flexibilität auf.

Beste Wetterbeständigkeit der erfindungsgemäßen Beschichtungen kann erzielt werden, wenn die dafür verwendeten carboxylgruppenhaltigen Polyesterharze Isophthalsäure als einzige aromatische Dicarbonsäure enthalten und auf der Glykolseite zumindest überwiegend oder ausschließlich aus Einheiten von Neopentylglykol zusammengesetzt sind. Im Gegensatz zum bekannten Stand der Technik sind die so erzeugten Beschichtungen flexibel und weisen dazu beste Vermahlbarkeit, Lagerstabilität und hervorragenden Oberflächenaspekt auf.

Ausgezeichnete Eigenschaften weisen beispielsweise Formulierungen aus einem Polyesterharz auf der Basis von Isophthalsäure und Neopentylglykol mit einer Säurezahl von 31 und einem anschließenden Zusatz von 1,2 - 1,5 Gew.-% 1,3,5-Tris(2-carboxyethyl)isocyanurat, gehärtet mit Primid XL 552 oder Triglycidylisocyanurat, auf.

1,3,5-Tris(2-carboxyethyl)isocyanurat wird von Cytec Industries Inc. unter der Bezeichnung Powderlink^{®} 1196 resin angeboten, wofür ein "durchschnittliches Molekulargewicht" angegeben wird, das exakt dem Molekulargewicht von 1,3,5-Tris(2-carboxyethyl)isocyanurat entspricht, was einen polymeren Charakter dieses Handelsproduktes ausschließt.

Im Produktdatenblatt (Revisionsdatum: März 2004) wird Powderlink^{®} 1196 auf Grund seiner Carbonsäure-Funktionalität als reaktiv gegenüber Harzen mit freien Epoxidgruppen, wie es auf Glycidylmethacrylat (GMA) basierende Acrylcopolymere sind, bezeichnet. (Eine Kombination mit niedermolekularen, höher epoxyfunktionellen Verbindungen, wie beispielsweise Triglycidylisocyanurat wäre theoretisch möglich, würde für herkömmliche Lackanwendungen aber wenig Sinn machen, da bei der extrem hohen Vemetzungsdichte solcher Formulierungen äußerst spröde Massen ohne Praxistauglichkeit resultieren würden.) In einer Übersicht dieses Datenblattes werden die Pulverlackeigenschaften dargestellt, welche resultieren, wenn man in einer Reihe von Formulierungen auf der Basis eines GMA- Acrylcopolymerharzes und Dodecandisäure als Härter den letzteren sukzessive durch Powderlink^{®} 1196 resin ersetzt. Dabei fällt auf, dass bei Zunahme des Powderlink^{®} 1196 - Anteils zu Lasten der Dodecandisäure in den Formulierungen die Härte der Beschichtungen zunimmt, ihre Flexibilität hingegen abnimmt.

Auf Grund dieses Befundes war es daher keineswegs zu erwarten, dass die Verwendung von Powderlink^{®} 1196 in Analogie zur Lehre von EP 0 322 834 B1 - an Stelle der aliphatischen Dicarbonsäure Dodecandisäure - , es im Gegensatz zu dieser sehr wohl erlaubt, hitzehärtbare, hochwetterfeste und zugleich flexible Pulverbeschichtungen auf der Basis von Polyesterharzen hohen Isophthalsäuregehaltes und eines β-Hydroxyalkylamid-Härters (Primid XL 552) herzustellen, welche einen erstklassigen Oberflächenaspekt, problemlose Vermahlbarkeit und Lagerbeständigkeit aufweisen und deren Preis jenem herkömmlicher Isophthalsäure-Formulierungen entspricht. Weiters wird weder im erwähnten Datenblatt noch in der EP 0 322 834 B1 darauf verwiesen, dass diese guten Lackeigenschaften dann erwartet werden können, wenn ein solcher Zusatz in die Schmelzphase eines fertig gestellten oder wieder aufgeschmolzenen Polyesterharzes erfolgt. Wird hingegen Powderlink^{®} 1196 dem Pulverlack-Rohansatz so zugesetzt, wie das im zitierten Datenblatt vorgestellt und auch in EP 0 322 834 B1 in analoger Weise für den Zusatz der Dodecandisäure geoffenbart wird, resultieren bei entsprechenden Versuchen nur wenig befriedigende Ergebnisse.

Überraschend ist weiterhin der Umstand, dass diese Effekte zu beobachten sind, obwohl Powderlink^{®} 1196 in den erfindungsgemäßen Formulierungen nicht, wie in den Herstellerangaben angesprochen, als Vernetzer für die Harzkomponente (den Polyester), welcher ja keine Epoxidgruppen aufweist, fungieren kann, sondern als Vernetzer für jene Bestandteile wie Primid XL 552 oder Triglycidylisocyanurat wirkt, welche ihrerseits - aufgrund ihrer geringen Molmasse und wohl definierten Struktur - nach allgemeiner Auffassung als Vernetzer gelten. Eine aus diesem Umstand resultierende, im Umfeld dieser Härtermoleküle weiter gesteigerte Vemetzungsdichte ließe eher gesteigerte Härte als gesteigerte Flexibilität erwarten.

Vorteilhaft kann es auch sein, aus Harzschmelze und heterocyclischen Polycarbonsäuren, vorzugsweise Tricarbonsäure, sogenannte Masterbatches herzustellen, welche eine flexiblere Gestaltung der nachfolgenden Mengendosierung an jener Polycarbonsäure bzw. Tricarbonsäure gestatten.

Die betreffenden Polyesterharze sind mit den vorgenannten Härtern gemäß den Empfehlungen der Hersteller jener Härter zu kombinieren. Neben Bindemittelkomponenten enthalten Pulverlacke in der Regel weitere Stoffe wie Additive, welche beispielsweise als Verlaufsmittel, Härtungskatalysatoren, Entgasungshilfen, Mattierungsmittel oder Strukturbildner dienen, und gegebenenfalls Pigmente und Füllstoffe. Diese Komponenten werden innig vermischt und anschließend üblicherweise mit Hilfe eines Extruders in der Schmelze homogenisiert. Das Extrudat wird gekühlt und anschließend vermahlen und gesiebt, wobei eine Kornobergrenze von < 90 µm angestrebt werden sollte.

Neben diesem Verfahren ist es auch bekannt, die Komponenten in gelöster Form zu homogenisieren. Bei Verwendung eines Lösungsmittels kann mit einem anschließendem Sprühtrocknungsprozess im klassischen Sinn der betreffende Pulverlack hergestellt werden. Verwendet man als Lösungsmittel beispielsweise überkritisches Kohlendioxid, genügt es, die erhaltene Lösung über eine Düse auf Normaldruck zu entspannen, um an die gewünschten pulvrigen Massen zu gelangen.
Die so erhaltenen pulverigen Massen werden üblicherweise mit Hilfe einer Sprühvorrichtung unter elektrostatischer oder tribostatischer Aufladung auf die zu beschichteten Objekte appliziert und bei Temperaturen zwischen etwa 150 und 200°C ca. 5 bis 30 Minuten lang eingebrannt. Dazu können Konvektionsöfen ebenso wie Infrarotstrahler verwendet werden. Bekannt ist es auch, die zu beschichtenden Teile vorzuheizen und die Pulverlacke im Wirbelbettverfahren aufzubringen.

Weitere Angaben zur Herstellung und Verarbeitung von Pulverlacken können der ausführlichen Monografie "Powder Coatings - Chemistry and Technology" von Pieter Gillis de Lange (Vincentz, 2004) entnommen werden.

Die erfindungsgemäßen Polyesterharze setzen sich zu mindestens 50 Mol-%, bezogen auf die Gesamtheit aller verwendeten Carbonsäureeinheiten, aus Einheiten der Isophthalsäure und zu mindestens 50 Mol-%, bezogen auf die Gesamtheit aller verwendeten hydroxyfunktionellen Einheiten, aus Einheiten des Neopentylglykols zusammen. Wie schon zuvor dargestellt, haben solche Polyesterharze besonders hohe Wetterstabilität der damit hergestellten Pulverbeschichtungen zur Folge.

Daneben können weitere Carbonsäuren sowie hydroxyfunktionelle Einheiten als Ausgangsstoffe herangezogen werden.

Als solche Carbonsäuren können aromatische Polycarbonsäuren wie beispielsweise Phthalsäure, Terephthalsäure, Trimellitsäure, Pyromellitsäure, Trimesinsäure, 3,6-Dichlorphthalsäure und Tertrabromphthalsäure eingesetzt werden. Daneben können ebenso aliphatische und/oder cycloaliphatische Polycarbonsäuren zum Einsatz kommen, beispielsweise Tetrahydrophthalsäure, Hexahydrophthalsäure, Hexahydroendomethylentetrahydrophthalsäure, Cylohexan-1,3-dicarbonsäure, Cylohexan-1,4-dicarbonsäure, Adipinsäure, Azelainsäure, Bernsteinsäure, Glutarsäure, Korksäure, Sebazinsäure, Dodecandisäure, 1,3,5-Tris(2-carboxyethyl)isocyanurat, Maleinsäure, Fumarsäure, dimere sowie trimere Fettsäuren. Anstelle der freien Carbonsäure können - soweit verfügbar - auch deren funktionelle Derivate wie Ester, Anhydride oder Acylhalogenide zum Einsatz kommen. Als weitere Quellen polyfunktioneller, carboxylgruppenhlaltiger Komponenten sind Hydroxycarbonsäuren sowie ggf. verfügbare Lactone, wie beispielsweise 12-Hydroxystearinsäure, ε-Caprolacton, Hydroxypivalinsäure oder Dimethylolpropionsäure einsetzbar. Neben diesen polyfunktionellen carboxylgruppenhlaltigen Ausgangsstoffen können auch - geringere - Anteile von Monocarbonsäuren wie beispielsweise Benzoesäure, tert. Butylbenzoesäure, Hexahydrobenzoesäure und aliphatische Monocarbonsäuren zur Anwendung kommen.

Als weitere hydroxyfunktionelle Einheiten sind insbesondere aliphatische oder cycloaliphatische Diole einsetzbar, wie beispielsweise Ethylenglykol, Propan-1,2-diol, Propan-1,3-diol, 2- Methylpropan-1,3-diol, 2-Ethyl-2-butyl-propan-1,3-diol, Hydroxypivalinsäureneopentylglykolester, Butan-1,2-diol, Butan-1,3-diol, Butan-1,4-diol, Butan-2,3-diol, Pentan-1,5-diol, 3-Methylpentan-1,5-diol, 2-Ethyl-hexan-1,3-diol, Hexan-2,5-diol, Hexan-1,2-diol, Hexan-1,6-diol sowie wie auch die von den höheren Alkanen abgeleitetenl,2- und α,ω-Diole, Cyclohexandimethanol, Cyclohexan-1,2-diol, Cyclohexan-1,3-diol, Cyclohexan-1,4-diol, hydriertes Bisphenol A, 2,2,4,4-Tetramethylcyclobutan-1,3-diol, 4,8-Bis(hydroxy-methyl)tricyclo[5.2.1.0^{2,6}]decan, Diethylenglykol oder Triethylenglykol. Daneben können auch epoxyfunktionelle Verbindungen zum Einsatz kommen, welche als reaktive innere Ether vicinaler Diole anzusehen sind. Beispiele für optional höherufnktionelle Polyole sind Glycerin, Hexan-1,2,6-triol, Trimethylolethan, Trimetylolpropan, Di-Trimethylolpropan, Tris-(2-hydroxyethyl)isocyanurat, Pentaerythrit, Sorbit oder Di-Pentaerythrit. Die als mögliche Quellen für Hydroxyfunktionalität dienenden Hydroxycarbonsäuren wurden schon bei den Carbonsäuren genannt.

Die Herstellung der Polyesterharze erfolgt nach an sich bekannten Methoden durch Ver- oder Umesterung, bevorzugt unter Verwendung geeigneter Katalysatoren, wie Dibutylzinnoxid oder Tetrabutyltitanat. Durch eine entsprechende Auswahl der verwendeten Rohstoffe und ihres Verhältnisses sowie der Synthesebedingungen werden Harzes erhalten, welche die gewünschten Kennzahlen - eine Glasübergangstemperatur Tg von wenigstens 35°C, eine Säurezahl von 15 bis 80 mg KOH/g und eine Hydroxylzahl von max. 15 mg KOH/g, vorzugsweise max. 10 mg KOH/g - aufweisen.

Wie die EP 0 649 890 B1 lehrt, können carboxylgruppenhaltige Polyesterharze nach zwei Verfahren hergestellt werden: Bei dem in jedem Fall anwendbaren 2-Stufenverfahren werden in einer ersten Reaktionsstufe die weniger reaktiven Carbonsäuren zu hydroxyfunktionellen Polyesterharzen umgesetzt, welche in einer nachfolgenden zweiten Reaktionsstufe mit den reaktiveren Carbonsäuren zum gewünschten carboxyfunktionellen Polyesterharz umgesetzt werden. Umfasst die Harzzusammensetzung hingegen lediglich Carbonsäuren ähnlicher Reaktivität, können alle Rohstoffe auf einmal in das Reaktionsgefäß eingebracht und bis zum fertigen Harz umgesetzt werden.

Die Herstellung und die Eigenschaften der erfindungsgemäßen, sowie der zum Vergleich dienenden Polyesterharze, sowie der daraus erzeugten Pulverlacke wird nachfolgend beispielhaft beschrieben, wobei diese Beispiele lediglich die Ausführung der Erfindung verdeutlichen, nicht aber diese einschränken sollen. Die Harze wurden nach einem 2-Stufenverfahren hergestellt; ihre Erzeugung nach einstufigem Verfahren wäre jedoch gemäß den verwendeten Rohstoffen ebenso möglich.

### Herstellung der carboxylfunktionellen Polyesterharze:

### Vergleichsbeispiel A

In einem 2-1-Reaktionsgefäß, ausgestattet mit Rührer, Temperaturfühler, partieller Rückflusskolonne, Destillationsbrücke und Inertgaseinleitung (Stickstoff) werden 558,30 g (5,36 Mol) 2,2-Dimethylpropandiol-1,3 vorgelegt und unter Erwärmen auf maximal 140°C unter Stickstoffatmosphäre aufgeschmolzen. Unter Rühren werden dann 747,63 g (4,50 Mol) Isophthalsäure sowie 0,1%, bezogen auf die Gesamtmenge des fertigen Harzes, Sn-haltiger Katalysator zugesetzt und die Massetemperatur schrittweise auf 240°C erhöht. Die Reaktion wird bei dieser Temperatur fortgesetzt, bis kein Destillat mehr entsteht und die Säurezahl (SZ) des hydroxyfunktionellen Polyesterharzes < 10 mg KOH / g Polyesterharz ist.

Anschließend werden 193,55 g Isophthalsäure (1,165 Mol) zugesetzt und die Veresterung bis zum Erreichen der gewünschten Säurezahl (etwa 31) fortgesetzt, wobei die Reaktion zuletzt durch die Anwendung von Vakuum, etwa 100 mbar, unterstützt wird. Das fertige Harz weist folgende Kennzahlen auf: Säurezahl (SZ) 31,2, Hydoxylzahl (OHZ) 3,4, Glasübergangstemperatur (Tg) ca. 63°C.

Vergleichsbeispiel B (entspricht Beispiel 13 aus EP 0 649 890 B1)

Analog zum Vergleichsbeispiel A werden in der ersten Reaktionsstufe 509,34 g (4,89 Mol) 2,2-Dimethylpropandiol-1,3, 20,39 5 g (0,173 Mol) Hexandiol 1,6, 15,43 g (0,115 Mol) Trimethylolpropan, 0,1%, bezogen auf die Gesamtmenge des fertigen Harzes, Sn-haltiger Katalysator und 643,79 g (3,875 Mol) Isophthalsäure sowie 21,77 g (1,133 Mol) Trimellitsäureanhydrid zu einem hydroxyl funktionellen Polyesterharz umgesetzt.

Dieses wird in der beschriebenen Weise unter Zusatz von 235,09 g (1,415 Mol) Isophthalsäure und 41,65 g (0,285 Mol) Adipinsäure zum fertigen Polyesterharz umgesetzt. Das fertige Harz weist folgende Kennzahlen auf: SZ 46,4 OHZ 3,2, Tg ca. 53,0°C.

Vergleichsbeispiel C (entspricht Beispiel IV aus EP 0 389 926 B1)

Analog zum Vergleichsbeispiel A werden in der ersten Reaktionsstufe 480,70 g (4,615 Mol) 2,2-Dimethylpropandiol-1,3, 53,68 g (0,400 Mol) Trimethylolpropan, 0,1%, bezogen auf die Gesamtmenge des fertigen Harzes, Sn-haltiger Katalysator und 662,07 g (3,985 Mol) Isophthalsäure sowie und 99,88 g (0,580 Mol) Cyclohexandicarbonsäure 1,4 zu einem hydroxylfunktionellen Polyesterharz umgesetzt.

Dieses wird in der beschriebenen Weise unter Zusatz von 198,54 g (1,195 Mol) Isophthalsäure zum fertigen Polyesterharz umgesetzt. Das fertige Harz weist folgende Kennzahlen auf: SZ 51,5, OHZ 4,5, Tg ca. 59,0°C.

### Beispiel 1, erfindungsgemäß

Zu einem Harz gemäß Vergleichsbeispiel A werden noch im Reaktionsgefäß bei einer Massetemperatur von ca. 240 °C 40,36 g (0.117 Mol) 1,3,5-Tris(2-carboxyethyl)isocyanurat zugesetzt und mit dem Rühren fortgefahren, bis die Masse wieder homogen erscheint. Das Harz enthält nunmehr 3,0 Gew.-% 1,3,5-Tris(2-carboxyethyl)isocyanurat und weist folgende Kennzahlen auf: SZ 43,3, OHZ 3,7, Tg ca. 61,0°C.

### Beispiel 1. Variante, erfindungsgemäß:

In einer Apparatur gemäß Vergleichsbeispiel A wird 750 g granuliertes Harz aus Vergleichsbeispiel A vorgelegt und unter Stickstoffatmosphäre durch Erhitzen mit Hilfe eines Heizbades geschmolzen. Die Temperatur der Masse wird auf 230°C gesteigert und unter Rühren 23,20 g 1,3,5-Tris(2-carboxyethyl)isocyanurat zugesetzt, was dieselbe Konzentration jenes Stoffes im Harz wie in Beispiel 1 zur Folge hat. Mit dem Rühren der Masse wird fortgefahren, bis die Masse homogen erscheint. Die Kennzahlen des Harzes lauten: SZ 42,8, OHZ 3,5, Tg ca. 62,0°C.

### Beispiel 2, erfindungsgemäß

Analog zum Vergleichsbeispiel A werden in der ersten Reaktionsstufe 556,21 g (5,34 Mol) 2,2-Dimethylpropandiol-1,3, 0,1%, bezogen auf die Gesamtmenge des fertigen Harzes, Sn-haltiger Katalysator, 471,84 g (2,84 Mol) Terephthalsäure und 275,79 g (1,66 Mol) Isophthalsäure zu einem hydroxylfunktionellen Polyesterharz umgesetzt.

Dieses wird in der beschriebenen Weise unter Zusatz von 196,05 g (1,18 Mol) Isophthalsäure zum fertigen Polyesterharz umgesetzt. Das fertige Harz weist folgende Kennzahlen auf: SZ 35,4 OHZ 3,6, Tg ca. 63,0°C.

Anschließend werden diesem Harz noch im Reaktionsgefäß bei einer Massetemperatur von ca. 240 °C 19,89 g (0.0577 Mol) 1,3,5-Tris(2-carboxyethyl)isocyanurat zugesetzt und mit dem Rühren fortgefahren, bis die Masse wieder homogen erscheint. Das Harz enthält nunmehr 1,5 Gew.-% 1,3,5-Tris(2-carboxyethyl)isocyanurat und weist nunmehr folgende Kennzahlen auf: SZ 42,5, OHZ 3,1, Tg ca. 61,5°C.

Die gemäß den vorstehenden Angaben hergestellten Harze werden im Anschluss an ihre Synthese in flache Blechtassen abgegossen und nach dem Erkalten zu Granulat, Korngröße ca. 4 mm, gebrochen. Zusammen mit weiteren Stoffen gemäß der nachstehenden Tabelle werden sie zu Pulverlacken formuliert:

| Prüfformulierung Nr. | 1 | 2 | 3 | 4 | 5 | 6 | 7 | 8 | 9 | 10 |
|---|---|---|---|---|---|---|---|---|---|---|
| Rohstoff | Gewichtsteile | | | | | | | | | |
| Polyesterharz A | 262 | -- | 257 | -- | 257 | 257 | 156 | 156 | 127 | -- |
| Polyesterharz B | -- | 257 | -- | -- | -- | -- | -- | -- | -- | -- |
| Polyesterharz C | -- | -- | -- | 247 | -- | -- | -- | -- | -- | -- |
| Polyesterharz 1 | -- | -- | -- | -- | -- | -- | 104 | -- | 127 | -- |
| Polyesterharz 1, Var. | -- | -- | -- | -- | -- | -- | -- | 104 | -- | -- |
| Polyesterharz 2 | -- | -- | -- | -- | -- | -- | -- | -- | -- | 257 |
| Powderlink 1196 | -- | -- | -- | -- | 3,12 | -- | -- | -- | -- | -- |
| Dodecandisäure | -- | -- | -- | -- | -- | 3,12 | -- | -- | -- | -- |
| Primid^{®} XL-552¹⁾ | 12,8 | 18,0 | -- | -- | 14,7 | 14,7 | 14,7 | 14,7 | -- | 17,8 |
| TGIC²⁾ | -- | -- | 18,0 | 28,0 | -- | -- | -- | -- | 20,8 | -- |
| Byk 364 P ³⁾ | 5,0 | 5,0 | 5,0 | 5,0 | 5,0 | 5,0 | 5,0 | 5,0 | 5,0 | 5,0 |
| Benzoin | 0,7 | 0,7 | 0,7 | 0,7 | 0,7 | 0,7 | 0,7 | 0,7 | 0,7 | 0,7 |
| Licowax Micropulver C⁴⁾ | 1,7 | 1,7 | 1,7 | 1,7 | 1,7 | 1,7 | 1,7 | 1,7 | 1,7 | 1,7 |
| Worlée Add 902 ⁵⁾ | 1,7 | 1,7 | -- | -- | 1,7 | 1,7 | 1,7 | 1,7 | -- | 1,7 |
| Martinal OL 104⁶⁾ | 9,9 | 9,9 | 9,9 | 9,9 | 9,9 | 9,9 | 9,9 | 9,9 | 9,9 | 9,9 |
| Reafree C 4705-10⁷⁾ | -- | -- | 1,7 | 1,7 | -- | -- | -- | -- | 1,7 | -- |
| Portaryte B 10⁸) | 23,9 | 23,9 | 23,9 | 23,9 | 23,9 | 23,9 | 23,9 | 23,9 | 23,9 | 23,9 |
| Bayferrox 3920⁹⁾ | 8,70 | 8,70 | 8,70 | 8,70 | 8,70 | 8,70 | 8,70 | 8,70 | 8,70 | 8,70 |
| Bayferrox 110M¹⁰⁾ | 3,05 | 3,05 | 3,05 | 3,05 | 3,05 | 3,05 | 3,05 | 3,05 | 3,05 | 3,05 |
| Farbruß FW 2V¹¹⁾ | 0,56 | 0,56 | 0,56 | 0,56 | 0,56 | 0,56 | 0,56 | 0,56 | 0,56 | 0,56 |

| | | | | | | | | | | |
|---|---|---|---|---|---|---|---|---|---|---|
| Hersteller: ¹⁾ EMS Primid ²⁾ Huntsman ³⁾ BYK Chemie ⁴⁾ Clariant ⁵⁾ Worlée ⁶⁾ Al-Group Alusuisse Martinswerk ⁷⁾ Cray Valley ⁸⁾ Ankerpoort ⁹⁾ Bayer ¹⁰⁾ Bayer ¹¹⁾ Degussa | | | | | | | | | | |

### Herstellung der Pulverlacke:

Die Rohstoffe der einzelnen Formulierungen wurden in einem Mischer der Type Pilot 3 der Fa. Thermo Prism innig vorgemischt und anschließend über einen Extruder der Type Prism Twinscrew 16 mm, Schneckenlänge = 24-facher Schneckendurchmesser, extrudiert (Temperierung der Heizzonen in Richtung des Materialflusses: 100, 130 und 125 °C, Drehzahl 400 min ⁻¹). Die gekühlten Extrudate wurden gebrochen, auf einer Sichtermühle gemahlen und mit einer Kornobergrenze von 85 µm abgesiebt. Anschließend wurden die Pulverlacke mit einer Schichtdicke von ca. 80 µm (fertiger Lackfilm) auf chromatierte Aluminiumbleche von 0,7 mm Dicke appliziert. Es erwiesen sich alle Formulierungen gut vermahlbar.

### Einbrennbedingungen:

gradient-oven: (Fa. BYK-Gardner; zur Beurteilung der mechanischen Werte): 15 min. 150 - 220°C

Umluftofen (Fa. Heraeus; zur Beurteilung der Glanzhaltung nach Schnellbewitterung): 15 min. 200°C

Die nicht applizierten Pulverlackreste wurden drei Wochen lang bei 35°C gelagert und erfuhren keine Verschlechterung ihres Rieselverhaltens.

Die im gradient-oven eingebrannten Prüfbleche wurden in Abständen, welche 10°C-Temperaturintervallen entsprechen, einer Kugelschlagprüfung gemäß ASTM D 2794 ("Standard Test Method for Resistance of Organic Coatings to the Effects of Rapid Deformation [Impact]") unterzogen, Belastung 20 in.-lb, Kugeldurchmesser 15,9 mm.

Die im Umluftofen eingebrannten Prüfbleche wurden im Q-Panel Accelerated Weathering Tester QUV/SE der Fa. The Q-Panel Company 600 h lang belastet. (UVB-313-Lampen, 4 Std. Betauen bei 40°C, 4 Std. Bestrahlen bei 50°C, Bestrahlungsstärke 0,67 W/M). Im Anschluss an die Belastung wurde an den zu Beginn vermessenen Prüfblechen der Glanz gemäß ISO 2813 erneut vermessen und der Restglanz ermittelt. Die Ergebnisse sind nachfolgend in Tabellenform wiedergegeben:

| Prüfformulierung | 1 | 2 | 3 | 4 | 5 | 6 | 7 | 8 | 9 | 10 |
|---|---|---|---|---|---|---|---|---|---|---|
| Kugel-Schlag | starke Risse | starke Risse | starke Risse | Risse | Risse | starke Risse | 165 | 165 | 180 | 160 |
| Oberflächenaspekt | 2 | 1 | 4 | 3 | 3 | 1 | 1 | 1 | 1 | 1 |
| Verlauf | 5 | 1-2 | 1 | 5 | 3 | 1 | 1-2 | 1-2 | 1 | 1 |
| Restglanz | 78,7 | 79,8 | 69,2 | 71,8 | 78,6 | 79,8 | 78,7 | 77,5 | 69,2 | 48,6 |

Oberflächenaspekt, Verlauf: "1" steht für "sehr gut", "5" für "sehr schlecht".

Es fällt auf, dass sämtliche Formulierungen aus Vergleichsbeispielen (1 - 6) über den gesamten Einbrennbereich nach der zuvor beschriebenen Kugelschlagprüfung mehr oder weniger starke Risse aufweisen. Lediglich die erfindungsgemäßen Formulierungen (7 - 10) zeigen ab einem bestimmten Temperaturniveau (die Zahlen in der betreffenden Zeile der Tabelle bezeichnen diese Temperatur in °C) ein rissfreies Prüfergebnis.

Die Restglanzwerte zeigen, abgesehen von Prüfformulierung 10, welche neben Isophthalsäure auch erhebliche Mengen an Terephthalsäure im Polyester enthält, annähernd vergleichbares Niveau. Die Formulierungen 1 (Vergleichsbeispiel) sowie 7 und 8 (erfindungsgemäße Beispiele) unterscheiden sich bei ansonsten vergleichbarer Formulierung durch die Nichtverwendung bzw. Verwendung der heterozyklischen Tricarbonsäure 1,3,5-Tris(2-carboxyethyl)isocyanurat und es fällt auf, dass die gefundenen Restglanzwerte sehr ähnlich sind. Ähnliches gilt für die Formulierungen 3 (Vergleichsbeispiel) und 9 (erfindungsgemäßes Beispiel), wenn auch auf etwas tieferem Restglanzniveau. Daraus ist zu schließen, dass die erfindungsgemäße Mitverwendung von 1,3,5-Tris(2-carboxyethyl)isocyanurat (Powderlink^{®} 1196) keinerlei Einfluss auf den Restglanzwert der Prüfformulierungen ausübt.

Hinsichtlich Oberflächenaspekt und Verlauf sind alle erfindungsgemäßen Formulierungen sehr gut bis gut. Bei den Vergleichsformulierungen trifft dies überwiegend nicht zu.

Fazit: Das erfindungsgemäße Verfahren und die erfindungsgemäßen Formulierungen gestatten die Herstellung hochwetterfester und zugleich flexibler Pulverbeschichtungen mit erstklassigem Oberflächenaspekt und Verlauf, die sich hinsichtlich ihrer Vermahlbarkeit und Lagerstabilität als problemlos erweisen, und die sich preislich mit Formulierungen auf der Basis von amorphen Polyesterharzen unter der überwiegenden Verwendung von Isophthalsäure und ggf. Terephthalsäure vergleichen lassen.

## Patentansprüche

1. Hitzehärtbare Pulverlackzusammensetzung, die a) mindestens ein carboxylfunktionelles Polyesterharz, das eine Säurezahl von 10 - 100 mg KOH/g Polyesterharz und eine Hydroxylzahl von höchstens 15 mg KOH/g Polyesterharz aufweist und im wesentlichen auf Einheiten von Dicarbonsäuren, Diolen und Monomeren der Funktionalität 3 oder höher basiert, wobei als Dicarbonsäuren zumindest 65 Mol-%, bezogen auf die Gesamtheit aller verwendeten Dicarbonsäuren, aromatische Dicarbonsäuren mit 8 bis 16 C-Atomen, unter welchen aromatischen Dicarbonsäuren der Anteil von Isophthalsäure mindestens 50 Mol-%, bezogen auf die Gesamtheit aller enthaltener Dicarbonsäuren, ist, und maximal 35 Mol-%, bezogen auf die Gesamtheit aller enthaltener Dicarbonsäuren, aliphatische Dicarbonsäuren mit 4 bis 22 C-Atomen und/oder cycloaliphatische Dicarbonsäuren mit 8 bis 16 C-Atomen und als Diole zumindest 50 Mol-%, bezogen auf die Gesamtheit aller enthaltener Diole, verzweigte aliphatische Diole mit 4 bis 12 C-Atomen, welche verzweigten aliphatischen Diole auch eine Estergruppe enthalten können und unter welchen mindestens 50 Mol-% Neopentylglykol, bezogen auf die Gesamtheit aller enthaltenen Diole, ist, und maximal 50 Mol-%, bezogen auf die Gesamtheit aller enthaltener Diole, lineare aliphatische Diole mit 2 bis 22 C-Atomen und/oder cycloaliphatische Diole mit 6 bis 16 C-Atomen enthalten sind, und wobei die Monomere einer Funktionalität 3 oder höher in einer Menge von maximal 10 Mol-%, bezogen auf die Gesamtheit aller Dicarbonsäuren und Diole, enthalten sind, b) mindestens einen durch Hitzeeinwirkung zur Ausbildung kovalenter Bindungen mit dem Polyesterharz befähigten Stoff, der mindestens eine polyepoxidische Verbindung mit der Funktionalität 2 oder höher und/oder mindestens ein β-Hydroxyalkylamid mit der Funktionalität 2 oder höher aufweist, und c) übliche Additive umfasst,
**dadurch gekennzeichnet, dass**
die Pulverlackzusammensetzung 0,05 bis 5 Gew.-%, bezogen auf die Gesamtheit der Pulverlackzusammensetzung, einer heterocyclischen Polycarbonsäure enthält.

2. Pulverlackzusammensetzung nach Anspruch 1, **dadurch gekennzeichnet, dass** die heterocyclische Polycarbonsäure eine Tricarbonsäure, ist.

3. Pulverlackzusammensetzung nach Anspruch 2, **dadurch gekennzeichnet, dass** die Tricarbonsäure 1,3,5-Tris(2-carboxyethyl)isocyanurat ist.

4. Pulverlackzusammensetzung nach einem der Ansprüche 1 bis 3, **dadurch gekennzeichnet, dass** die heterocyclische Polycarbonsäure, vorzugsweise Tricarbonsäure, im Polyesterharz durch Einschmelzen verteilt enthalten ist.

5. Polyesterharz mit endständigen Carboxylgruppen zur Hertsellung von hitzehärtbaren Pulverlackzusammensetzungen nach einem der Ansprüche 1 bis 4, das eine Säurezahl von 10 - 100 mg KOH/g Polyesterharz und eine Hydroxylzahl von höchstens 15 mg KOH/g Polyesterharz aufweist und im wesentlichen auf Einheiten von Dicarbonsäuren, Diolen und Monomeren der Funktionalität 3 oder höher basiert, wobei als Dicarbonsäuren zumindest 65 Mol-%, bezogen auf die Gesamtheit aller verwendeten Dicarbonsäuren, aromatische Dicarbonsäuren mit 8 bis 16 C-Atomen, unter welchen aromatischen Dicarbonsäuren der Anteil von Isophthalsäure mindestens 50 Mol%, bezogen auf die Gesamtheit aller enthaltener Dicarbonsäuren, ist, und maximal 35 Mol-%, bezogen auf die Gesamtheit aller enthaltener Dicarbonsäuren, aliphatische Dicarbonsäuren mit 4 bis 22 C-Atomen und/oder cycloaliphatische Dicarbonsäuren mit 8 bis 16 C-Atomen und als Diole zumindest 50 Mol-%, bezogen auf die Gesamtheit aller enthaltener Diole, verzweigte aliphatische Diole mit 4 bis 12 C-Atomen, welche verzweigten aliphatischen Diole auch eine Estergruppe enthalten können und unter welchen mindestens 50 Mol-% Neopentylglykol, bezogen auf die Gesamtheit aller enthaltenen Diole, ist, und maximal 50 Mol%, bezogen auf die Gesamtheit aller enthaltener Diole, lineare aliphatische Diole mit 2 bis 22 C-Atomen und/oder cycloaliphatische Diole mit 6 bis 16 C-Atomen enthalten sind, und wobei die Monomere einer Funktionalität 3 oder höher in einer Menge von maximal 10 Mol-%, bezogen auf die Gesamtheit aller Dicarbonsäuren und Diole, enthalten sind, **dadurch gekennzeichnet, dass** das Polyesterharz 0,05 bis 5 Gew.-% einer heterocyclischen Polycarbonsäure enthält.

6. Polyesterharz nach Anspruch 5, **dadurch gekennzeichnet, dass** die heterocyclische Polycarbonsäure eine Tricarbonsäure ist.

7. Polyesterharz nach Anspruch 6, **dadurch gekennzeichnet, dass** die Tricarbonsäure 1,3,5-Tris(2-carboxyethyl)isocyanurat ist.

8. Polyesterharz nach einem der Ansprüche 5 bis 7, **dadurch gekennzeichnet, dass** die heterocyclische Polycarbonsäure, vorzugsweise Tricarbonsäure, im Polyesterharz durch Einschmelzen verteilt enthalten ist.

## Claims

1. Thermosetting powder paint composition which comprises a) at least one carboxyl-functional polyester resin having an acid number of 10 - 100 mg KOH/g polyester resin and a hydroxyl number of at most 15 mg KOH/g polyester resin and substantially based on units of dicarboxylic acids, diols and monomers having a functionality of 3 or greater, wherein, as dicarboxylic acids, at least 65 mol%, with respect to the totality of all dicarboxylic acids used, of aromatic dicarboxylic acids with 8 to 16 C atoms, among which aromatic dicarboxylic acids the component of isophthalic acid is at least 50 mol%, with respect to the totality of all dicarboxylic acids contained, and a maximum of 35 mol%, with respect to the totality of all dicarboxylic acids contained, of aliphatic dicarboxylic acids with 4 to 22 C atoms and/or cycloaliphatic dicarboxylic acids with 8 to 16 C atoms are contained, and, as diols, at least 50 mol%, with respect to the totality of all diols contained, of branched aliphatic diols with 4 to 12 C atoms, which branched aliphatic diols can also contain an ester group and among which is at least 50 mol% neopentyl glycol, with respect to the totality of all diols contained, and a maximum of 50 mol%, with respect to the totality of all diols contained, of linear aliphatic diols with 2 to 22 C atoms and/or cycloaliphatic diols with 6 to 16 C atoms are contained, and wherein the monomers having a functionality of 3 or greater are contained in a quantity of a maximum of 10 mol%, with respect to the totality of all dicarboxylic acids and diols, b) at least one substance which is made capable of forming covalent bonds with the polyester resin by the action of heat and which has at least one polyepoxide compound having a functionality of 2 or greater and/or at least one βhydroxyalkylamide having a functionality of 2 or greater, and c) conventional additives, **characterized in that**
the powder paint composition contains 0.05 to 5 wt.%, with respect to the totality of the powder paint composition, of a heterocyclic polycarboxylic acid.

2. Powder paint composition according to Claim 1, **characterized in that** the heterocyclic polycarboxylic acid is a tricarboxylic acid.

3. Powder paint composition according to Claim 2, **characterized in that** the tricarboxylic acid is 1,3,5-tris(2-carboxyethyl)isocyanurate.

4. Powder paint composition according to one of Claims 1 to 3, **characterized in that** the heterocyclic polycarboxylic acid, preferably tricarboxylic acid, is contained in the polyester resin distributed by melting.

5. Polyester resin with terminal carboxyl groups for the manufacture of thermosetting powder paint compositions according to one of Claims 1 to 4, which has an acid number of 10 - 100 mg KOH/g polyester resin and a hydroxyl number of at most 15 mg KOH/g polyester resin and is substantially based on units of dicarboxylic acids, diols and monomers having a functionality of 3 or greater, wherein, as dicarboxylic acids, at least 65 mol%, with respect to the totality of all dicarboxylic acids used, of aromatic dicarboxylic acids with 8 to 16 C atoms, among which aromatic dicarboxylic acids the component of isophthalic acid is at least 50 mol%, with respect to the totality of all dicarboxylic acids contained, and a maximum of 35 mol%, with respect to the totality of all dicarboxylic acids contained, of aliphatic dicarboxylic acids with 4 to 22 C atoms and/or cycloaliphatic dicarboxylic acids with 8 to 16 C atoms are contained, and, as diols, at least 50 mol%, with respect to the totality of all diols contained, of branched aliphatic diols with 4 to 12 C atoms, which branched aliphatic diols can also contain an ester group and among which is at least 50 mol% neopentyl glycol, with respect to the totality of all diols contained, and a maximum of 50 mol%, with respect to the totality of all diols contained, of linear aliphatic diols with 2 to 22 C atoms and/or cycloaliphatic diols with 6 to 16 C atoms are contained, and wherein the monomers having a functionality of 3 or greater are contained in a quantity of a maximum of 10 mol%, with respect to the totality of all dicarboxylic acids and diols, **characterized in that** the polyester resin contains 0.05 to 5 wt.% of a heterocyclic polycarboxylic acid.

6. Polyester resin according to Claim 5,
**characterized in that** the heterocyclic polycarboxylic acid is a tricarboxylic acid.

7. Polyester resin according to Claim 6,
**characterized in that** the tricarboxylic acid is 1,3,5-tris(2-carboxyethyl)isocyanurate.

8. Polyester resin according to one of Claims 5 to 7, **characterized in that** the heterocyclic polycarboxylic acid, preferably tricarboxylic acid, is contained in the polyester resin distributed by melting.

## Revendications

1. Composition de peinture en poudre thermodurcissable qui a) est à base d'au moins une résine de polyester à fonctionnalité carboxyle qui présente un indice d'acide de 10 à 100 mg KOH/g de résine de polyester et un indice hydroxyle d'au plus 15 mg KOH/g de résine de polyester et essentiellement, à base de motifs d'acides dicarboxyliques, de diols et de monomères de fonctionnalité 3 ou supérieure, dans laquelle on utilise comme acides dicarboxyliques, au moins 65 % en mole, par rapport à la totalité de tous les acides dicarboxyliques utilisés, d'acides dicarboxyliques aromatiques comportant 8 à 16 atomes de carbone, la proportion d'acide isophtalique dans les acides dicarboxyliques aromatiques étant au moins de 50 % en mole par rapport à la totalité de tous les acides dicarboxyliques contenus, et au maximum 35 % en mole, par rapport à la totalité de tous les acides dicarboxyliques contenus, d'acides dicarboxyliques aliphatiques comportant 4 à 22 atomes de carbone et/ou des acides dicarboxyliques cyclo-aliphatiques comportant 8 à 16 atomes de carbone et comme diols, au moins 50 % en mole, par rapport à la totalité de tous les diols contenus, de diols aliphatiques ramifiés comportant 4 à 12 atomes de carbone, lesdits diols aliphatiques pouvant également contenir un groupe ester et parmi lesquels, la proportion étant d'au moins 50 % en mole de néopentylglycol par rapport à la totalité de tous les diols contenus et contenant au maximum, 50 % en mole, par rapport à la totalité de tous les diols contenus, de diols aliphatiques linéaires comportant 2 à 22 atomes de carbone et/ou des diols cycloaliphatiques comportant 6 à 16 atomes de carbone, et dans laquelle les monomères de fonctionnalité 3 ou supérieure sont contenus en une quantité maximale de 10 % en mole par rapport à la totalité de tous les acides dicarboxyliques et diols, b) au moins une substance étant capable de former des liaisons covalentes avec la résine de polyester sous l'effet de la chaleur, qui présente au moins une liaison poly-époxydique de fonctionnalité 2 ou supérieure et/ou au moins un β-hydroxyalkylamide de fonctionnalité 2 ou supérieure, et c) des additifs habituels,
**caractérisée en ce que** la composition de peinture en poudre contient 0,05 à 5 % en poids, par rapport à la totalité de la composition de peinture en poudre, d'un acide polycarboxylique hétérocyclique.

2. Composition de peinture en poudre selon la revendication 1, **caractérisée en ce que** l'acide polycarboxylique hétérocyclique est un acide tricarboxylique.

3. Composition de peinture en poudre selon la revendication 2, **caractérisée en ce que** l'acide tricarboxylique est le 1,3,5-tris(2-carboxyéthyl)isocyanurate.

4. Composition de peinture en poudre selon l'une quelconque des revendications 1 à 3, **caractérisée en ce que** l'acide polycarboxylique hétérocyclique, de préférence, l'acide tricarboxylique est contenu dispersé par fusion dans la résine de polyester.

5. Résine de polyester comportant des groupes terminaux carboxyle pour produire des compositions de peinture en poudre thermodurcissables selon l'une quelconque des revendications 1 à 4, qui présente un indice d'acide de 10 à 100 mg KOH/g de résine de polyester et un indice hydroxyle d'au plus 15 mg KOH/g de résine de polyester et est essentiellement à base d'unités d'acides dicarboxyliques, de diols et de monomères de fonctionnalité 3 ou supérieure, dans laquelle on utilise comme acides dicarboxyliques, au moins 65 % en mole, par rapport à la totalité de tous les acides dicarboxyliques utilisés, d'acides dicarboxyliques aromatiques comportant 8 à 16 atomes de carbone, la proportion d'acide isophtalique dans les acides dicarboxyliques aromatiques étant au moins de 50 % en mole par rapport à la totalité de tous les acides dicarboxyliques contenus, et au maximum 35 % en mole, par rapport à la totalité de tous les acides dicarboxyliques contenus, d'acides dicarboxyliques aliphatiques comportant 4 à 22 atomes de carbone et/ou des acides dicarboxyliques cyclo-aliphatiques comportant 8 à 16 atomes de carbone et comme diols, au moins 50 % en mole par rapport à la totalité de tous les diols contenus, de diols aliphatiques ramifiés comportant 4 à 12 atomes de carbone, lesdits diols aliphatiques pouvant également contenir un groupe ester et parmi lesquels, la proportion étant d'au moins 50 % en mole de néopentylglycol par rapport à la totalité de tous les diols contenus et contenant au maximum, 50 % en mole, par rapport à la totalité de tous les diols contenus, de diols aliphatiques linéaires comportant 2 à 22 atomes de carbone et/ou de diols cycloaliphatiques comportant 6 à 16 atomes de carbone, et dans laquelle les monomères de fonctionnalité 3 ou supérieure sont contenus en une quantité maximale de 10 % en mole par rapport à la totalité de tous les acides dicarboxyliques et diols, **caractérisée en ce que** la résine de polyester contient 0,05 à 5 % en poids d'un acide polycarboxylique hétérocyclique.

6. Résine de polyester selon la revendication 5, **caractérisée en ce que** l'acide polycarboxylique hétérocyclique est un acide tricarboxylique.

7. Résine de polyester selon la revendication 6, **caractérisée en ce que** l'acide tricarboxylique est le 1,3,5-tris(2-carboxyéthyl)isocyanurate.

8. Résine de polyester selon l'une des revendications 5 à 7, **caractérisée en ce que** l'acide polycarboxylique hétérocyclique, de préférence l'acide tricarboxylique est contenu dispersé par fusion dans la résine de polyester.
